# EUROPEAN PATENT APPLICATION

(11) **EP 2 982 587 A1**
(43) Date of publication of application: **10.02.2016**
(21) Application number: 15179198.5
(22) Date of filing: 30.07.2015
(51) Int. Cl.: B62K 3/02, B62M 9/125, B62K 19/18, B62K 19/30

(54) **BICYCLE WITH PIVOTING DERAILLEUR HANGER**

(30) Priority: 08.08.2014 US 201414455060
(71) Applicant: Cycling Sports Group, Inc., Wilton, Connecticut 06897 (US)
(72) Inventor: Mikesell, Jeremy, Danbury, CT Connecticut 06810 (US); Detwiler, Curtis, Bethel, CT Connecticut 06801 (US)
(74) Representative: Siecker, Eric Johannes

(57) **Abstract**

A bicycle having an assembly with a derailleur hanger is provided. The bicycle includes a frame having a chain stay member (146), the chain stay member having a first end adjacent a crank assembly and an opposing second end. A hub is removably coupled to the frame. A rear drop out member (154) is coupled to the chain stay member, the drop out member having a recess, the slot having a first hole extending therethrough. A brake caliper (160) is coupled to the chain stay member adjacent the second end. A derailleur hanger (158) is movably coupled to the rear drop out member (154) , the derailleur hanger (158) having a protrusion positioned within the slot, the derailleur hanger (158) being movable from a first position with the second hole arranged co-axial with the first hole and a second position, the hub being coupled to the drop out member when the derailleur hanger (158) is in the first position.

## Description

### BACKGROUND OF THE INVENTION

The subject matter disclosed herein relates to a bicycle and in particular to a bicycle where the rear wheel hub may be easily removed.

A multi-gear bicycle uses a rear derailleur mechanism to shift the chain from one sprocket to an adjacent sprocket so as to enable a rider to go faster or climb hills more easily. Gear selection is made via a cable which extends from a lever positioned on the bicycle near the rider's hands to the rear derailleur mechanism. To change gears, the rider moves a lever to change the tension on the cable. This action results in the movement of a chain guide/pulley on the derailleur, which in turn causes the chain to move from one sprocket to an adjacent sprocket. By changing sprockets, the gear ratios are changed to increase or decrease the amount of effort the rider needs to apply to the bicycle pedals.

In addition to the derailleur, the rear area of the bicycle may include a number of other components, such as the drop out bracket and a rear disk brake caliper. It is desirable to arrange the drop out bracket to allow easy removal of the rear wheel hub. To accomplish this, typically the brake caliper is mounted to the seat stay member and at an angle (relative to the direction of the hub drop out path) that is greater than 49 degrees. This arrangement avoids interference between the caliper and the disc brake rotor during removal.

While existing bicycle rear drop out assemblies are suitable for their intended purposes the need for improvement remains, particularly in providing a bicycle rear drop out assembly that allows the brake caliper to be mounted to the chain stay at angles less than 49 degrees while still allowing the hub to be easily removed.

### BRIEF DESCRIPTION OF THE INVENTION

According to one aspect of the invention, a bicycle is provided. The bicycle including a frame having a first chain stay member, the first chain stay member having a first end adjacent a crank assembly and an opposing second end. A hub is removably coupled to the frame. A drop out member is coupled to the first chain stay member. A brake caliper is coupled to the first chain stay member adjacent the first chain stay member second end, the brake caliper arranged on an angle relative to the drop out axis. A derailleur hanger is movably coupled to the drop out member, the derailleur hanger having a protrusion, the protrusion having a second hole extending therethrough, the derailleur hanger being movable from a first position with the second hole arranged co-axial with the first hole and a second position, the hub being operably coupled to the drop out member when the derailleur hanger is in the first position.

According to another aspect of the invention, a drop out member and derailleur assembly for a bicycle is provided. A drop out member is configured to couple with a chain stay member of the bicycle, the drop out member a first hole extending therethrough, the first hole sized to receive a wheel axle. A derailleur hanger is rotatably coupled to the drop out member, the derailleur hanger having a protrusion, the protrusion having a second hole extending therethrough, the derailleur hanger movable between a first position with the second hole aligned with the first hole and a second position, wherein the derailleur hanger and drop out member cooperate to define a hub removal pathway when in the second position.

According to yet another aspect of the invention, a method of removing a hub from a bicycle is provided. The method including removing an axle from a wheel hub, the axle configured to extend through a drop out member and a derailleur hanger, the hub being configured to be retained within a recess of the drop out member. The derailleur hanger is pivoted from a first position to a second position, the derailleur hanger having an arm with an angled surface on one end and a derailleur bolt on a second end, the angled surface cooperating with the recess to define a hub removal path when in the second position such that the derailleur bolt does not interfere with the removal of the wheel hub. The wheel hub is then removed from the bicycle.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view illustration of a bicycle in accordance with an embodiment of the invention;
FIG. 2 is a perspective view illustration of a rear hub and derailleur hanger assembly;
FIG. 3 is a partial perspective view illustration of the rear hub and derailleur hanger assembly of FIG. 2;
FIG. 4 is a side view illustration of the rear hub and derailleur hanger assembly of FIG. 2;
FIG. 5 is a partial perspective view of the drop out bracket of FIG. 2;
FIG. 6 is perspective view illustration of the derailleur hanger of FIG. 2;
FIG. 7 is a perspective view of the rear hub and derailleur hanger assembly of FIG. 2 with the wheel axle partially removed;
FIG. 8 is a perspective view of the rear hub and derailleur hanger assembly of FIG. 2 with the wheel axle removed and the derailleur bracket pivoted to a second position;
FIG. 9 is a perspective view of the rear hub and derailleur hanger assembly of FIG. 2 with the hub removed;
FIG. 10 is a partial perspective view of the rear hub and derailleur hanger assembly of FIG. 9;
FIG. 11 is a side view of the rear hub and derailleur assembly with the derailleur hanger moved to a second position; and
FIGs. 12 - 15 illustrate views of a rear drop out and derailleur assembly in accordance with another embodiment of the invention.

The detailed description explains embodiments of the invention, together with advantages and features, by way of example with reference to the drawings.

### DETAILED DESCRIPTION OF THE INVENTION

Embodiments of the present invention provide advantages in allowing the removal of a wheel from a bicycle. Embodiments include advantages in allowing the brake caliper to be coupled to the chain stay without interfering with the wheel during removal. Still further embodiments of the invention include a derailleur hanger arrangement that pivots on the drop out bracket to allow removal of the wheel hub without interference from the derailleur bolt.

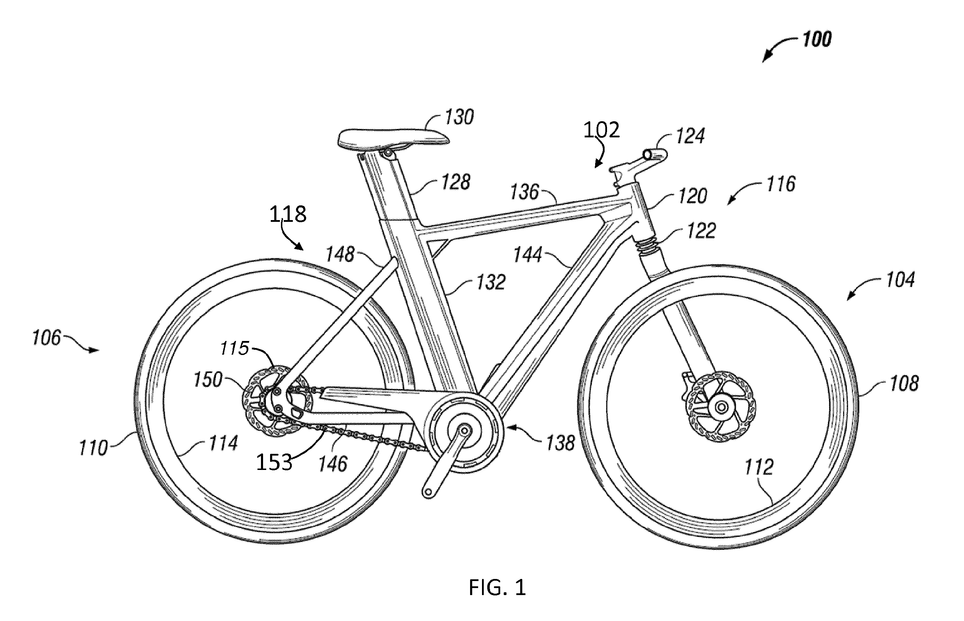

Referring now to FIG. 1, an exemplary embodiment is shown of a bicycle 100 having a bicycle frame 102 configured to receive front 104 and rear 106 wheels. Each wheel includes an inflatable tire 108, 110 which is supported by a rim 112, 114, respectively. The frame 102 includes a front section 116 and a rear section 118. The front section 116 includes a head tube 120 that is configured and dimensioned to receive a suspension system 122 and to allow a rotational degree of freedom between the head tube 120 and the suspension system 122. The suspension system 122 couples the front section 116 to the front wheel 104.

A handle bar 124 is connected to the suspension system 122 via a head tube 120 to allow the rider to rotate the front wheel 104 via the suspension system 122. The handle bar 124 typically has grips and hand brake actuators (not shown). On the opposite end of the frame front section 116, a rear seat post 128 is removably coupled to a seat tube 132 portion of the frame 102 by a clamp. The rear seat post 128 is configured to provide support for seat 130. A bottom bracket is coupled to an end of the seat tube 132 opposite the seat 130. In one embodiment, a down tube 144 member extends between the bottom bracket and the frame member 136. A crank assembly 138 is mounted to the bottom bracket. The crank assembly 138 includes a gear assembly and pedals (not shown).

In one embodiment, the rear section 118 includes a chain stay member 146 that is coupled to the bottom bracket. In some embodiments, a seat stay member 148 extends between an end of the chain stay member 146 and the seat tube 132. The chain stay member 146 and the seat stay member 148 couple the rear wheel 106 to the front section 116. It should be appreciated that while the embodiment of FIG. 1 illustrates the rear section 118 as being rigidly coupled to the seat tube 132 and bottom bracket, this is for exemplary purposes and the claimed invention should not be so limited. In another embodiment, the rear section 118 is coupled to the front section 116 by a pair of linkages and a rear suspension system as is known in the art. The linkages and rear suspension pivot, allowing the rear section 118 to move independently in the same plane as the front section 116. This type of bicycle, sometimes referred to as a full suspension type, provides energy absorption and damping for both wheels 104, 108 of the bicycle 100. The rear section 118 also includes an assembly 150 and a chain 153.

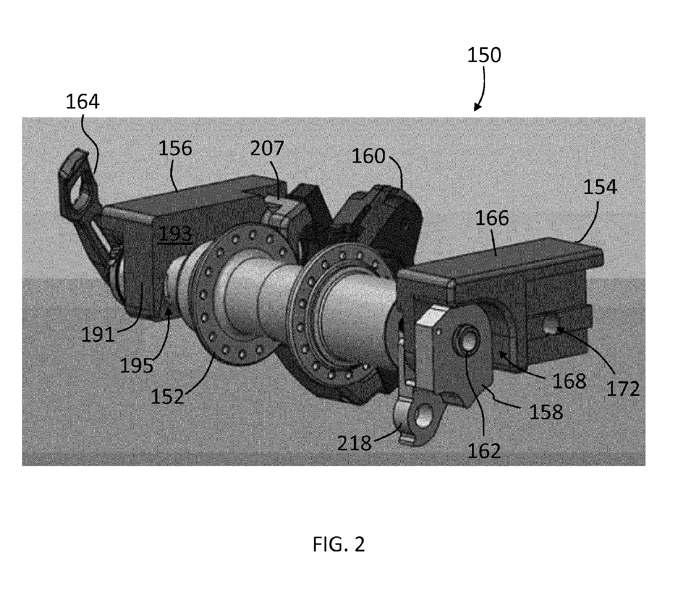

Referring now to FIGS. 2 - 4, an embodiment of a rear assembly 150 is shown. The assembly 150 includes a hub 152 to which the rim 114 and a disk brake rotor 115 (FIG. 1) are mounted. Collectively, the assembly 150, the rim 114 and the tire 110 may be referred to herein as the rear wheel 106. A pair of drop out brackets 154, 156 are arranged on either end of the hub 152. As will be discussed in more detail below, the first or right-side drop out bracket 154 is configured to receive a derailleur hanger 158. The second or left-side drop out bracket 156 is configured to mount a disk brake caliper 160. The drop out brackets 154, 156 are coupled the left and right side chain stay members 146 (FIG. 1). A wheel axle 161 extends through the assembly 150 to hold the assembly 150 to the bicycle 100 and allow the tire 110 to rotate. The wheel axle 161 may include a threaded end 162 that receives a fastener (not shown), such as a nut for example, and a lever 164 on an opposing end to allow the wheel axle 161 to be quickly installed and removed.

Embodiments herein describe the brake caliper as being coupled to the left chain stay member 146. This coupling or mounting may be accomplished in different manners. In one embodiment the left drop out bracket 156 is a metal forging that includes brake mounting surfaces. In another embodiment, a separate brake mount bracket, such as a metal forging for example, may be welded to the chain stay member 146. In still another embodiment, where the chain stay member 146 is made from a composite material, the brake mount can be part of the monolithic carbon structure or a metal alloy bracket that is adhesively bonded to the chain stay member. In the exemplary embodiment, the brake caliper mounting surfaces (whether on the drop out bracket or on the chain stay member) are located below the plane of the end of the seat stay member.

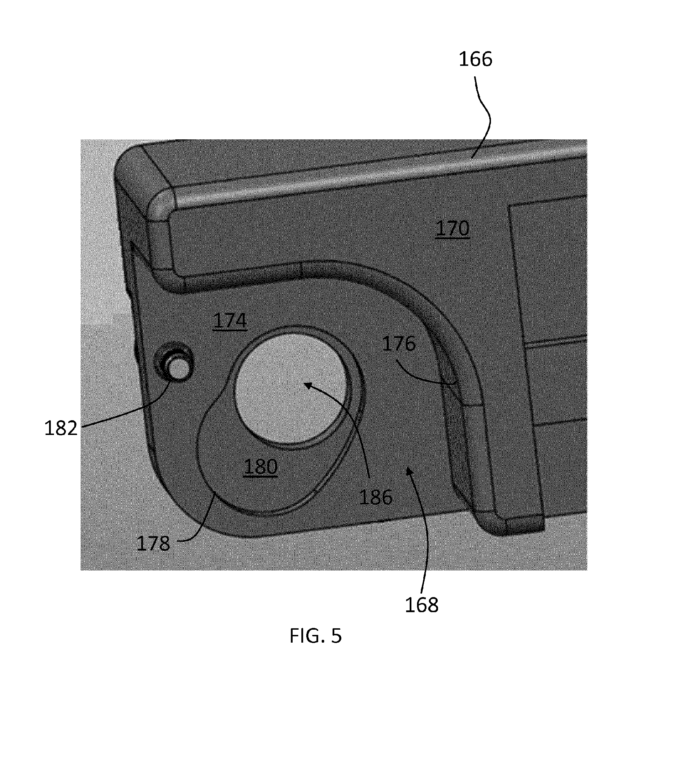

Referring now to FIG. 5 with continuing reference to FIGS. 1 - 4, an exemplary embodiment of the right drop out bracket 154 will be described. The drop out bracket 154 includes a body portion 166 that couples to the right chain stay member 146, such as with a fastener (not shown) that extends through hole 172 for example. The body portion 166 includes a first recess 168 formed in a first side 170. The first recess 168 is defined by a surface 174 and a side wall 176. In the exemplary embodiment, the first recess 168 is open on one-side, meaning the side wall 176 does not extend about the entire periphery of the first recess 168.

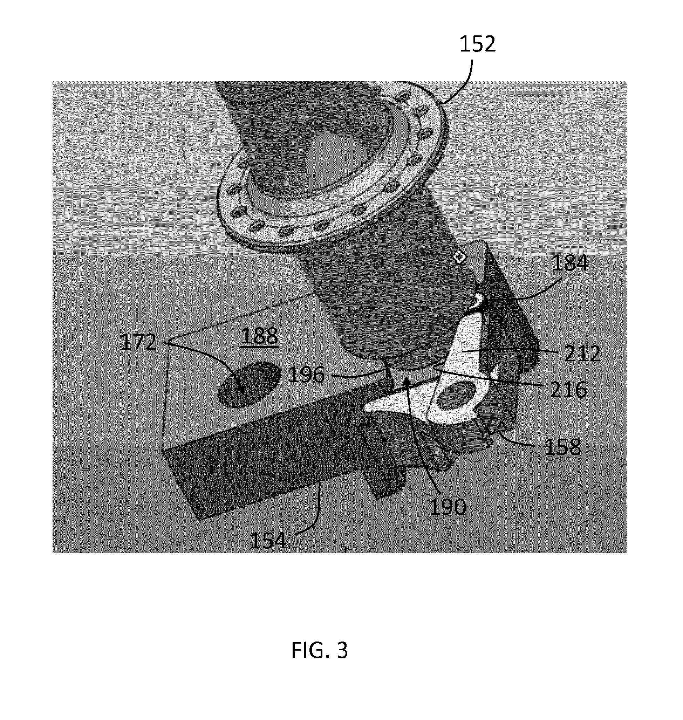

A slot 178 is formed in the surface 174. The slot 178 is a blind slot, meaning that it has a bottom defined by a surface 180. In the exemplary embodiment, the slot 178 is curved, with the center of curvature being co-axial with the center of a pivot 182. As will be discussed in more detail below, the pivot 182 couples the derailleur hanger 158 to the drop out bracket 154. The pivot 182 may be formed by a fastener 184 (FIG. 3) extending through a hole in the surface 174. A through hole 186 extends through the surface 180 and is sized to receive the wheel axle 161.

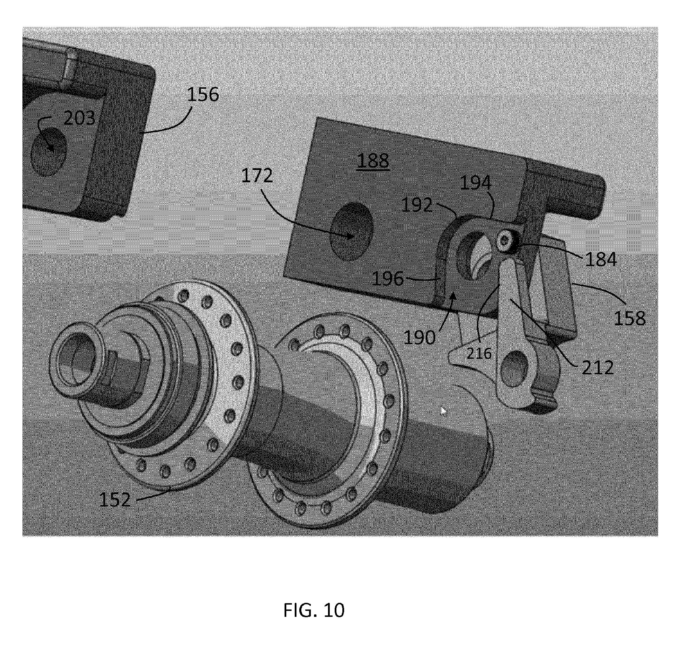

The body portion 166 further includes a second side 188 (FIG. 3) opposite the first side 170. The second side 188 includes a second recess 190. The second recess 190 is defined by a side wall 192 having a first planar portion 194 and a second planar portion 196 (FIG. 10). In the exemplary embodiment, the angle between the first planar portion 194 and the second planar portion 196 is an acute angle (i.e. less than 90 degrees), such that the second planar portion 196 angles toward the rear of the bicycle 100. As will be discussed in more detail below, the angle of the second portion cooperates with the derailleur hanger 158 to define a removal pathway for the wheel hub 152.

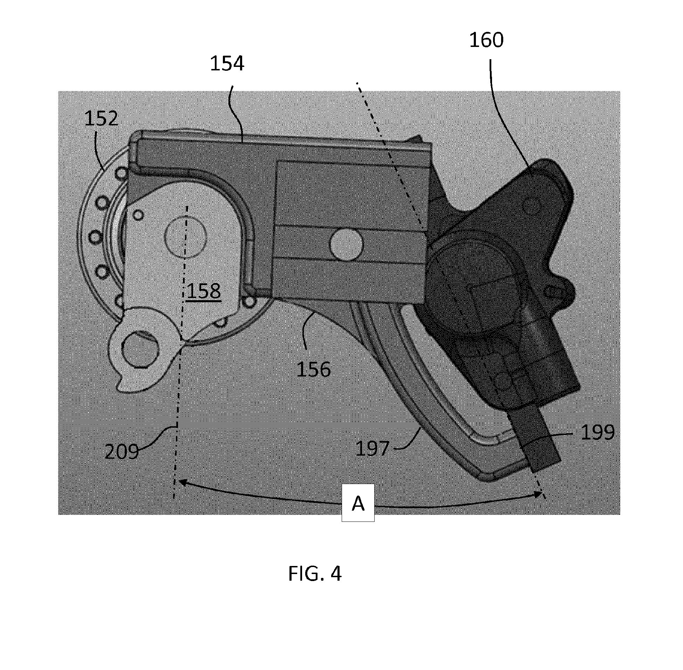

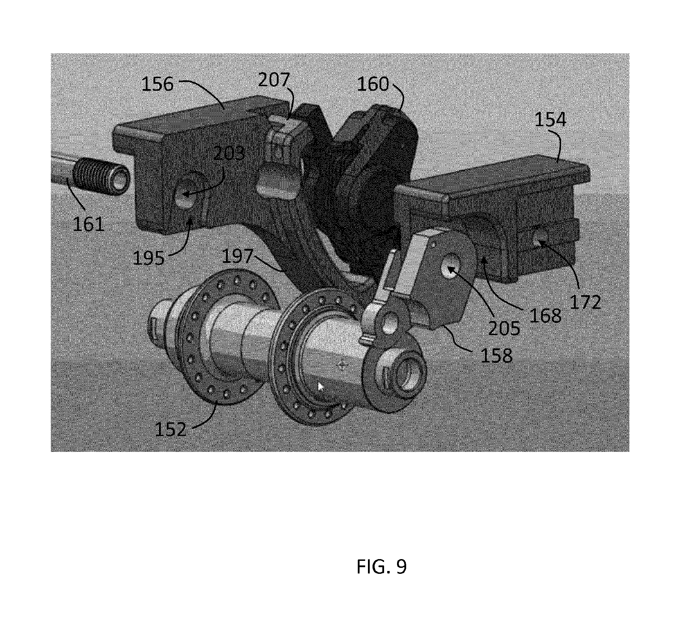

The second or left-side drop out bracket 156 is similarly configured with a body 191 that couples with the left-side chain stay member 146 (FIG. 2). On a side 193 facing the right-side drop out bracket, a slot 195 is formed. The slot is open on a side to allow the hub 152 to be inserted. In the exemplary embodiment, the slot 195 is formed on an angle to be parallel with the hub removal pathway 222 discussed below. A through hole 203 (FIG. 9) is formed in the slot 195 and is sized to receive the wheel axle 161. The hub 152 is retained within the slot 195 by the wheel axle 161. The left side drop out bracket 156 further includes an arm 197 (FIG. 4). The arm 197 includes an end surface 199 that supports and defines an angle "A" of the of the brake caliper 160. In one embodiment, the arm 197 includes a second end 207 (FIG. 9) opposite the surface 199 that also supports and defines the angle of the brake caliper 160. In the exemplary embodiment, the angle "A" is less than 49 degrees. In one embodiment, the angle "A" is 26 degrees. The angle "A" is defined as being between an axis 209 and the plane of the surface 199. In the exemplary embodiment, the axis 209 is generally perpendicular to the longitudinal axis of the chain stay member 146. In one embodiment, the drop out axis 209 extends through the center of the hole 205.

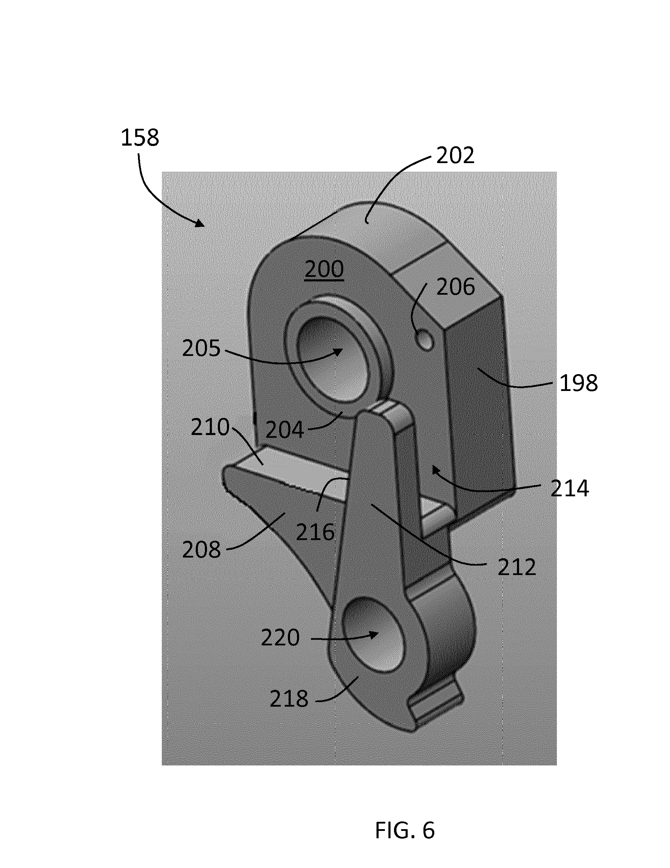

Referring now to FIG. 6 with continuing reference to FIGS. 1 - 5, an exemplary derailleur hanger 158 is shown. The derailleur hanger 158 includes a body portion 198 having a side 200 that faces the surface 174 of the drop out bracket 154. The body portion 198 includes a curved upper surface 202 that is shaped to allow the derailleur hanger to rotate within the first recess 168. A protrusion 204 extends substantially perpendicular to the surface 200. The protrusion 204 is sized to fit within the slot 180 and limit the rotation of the derailleur hanger 158 as discussed herein. In the exemplary embodiment, the protrusion 204 is cylindrical. A through hole 205 extends through the protrusion 204 and body 198. The hole 205 is sized to receive the wheel axle 161. The body portion 198 further includes a hole 206 that is sized to receive the pivot 182 that movably/rotationally couples the derailleur hanger 158 to the drop out bracket 154.

Extending from one edge of the side 200 is a shoulder 208. The shoulder 208 has an upper surface 210 having a width that is larger than the thickness between the recesses 168, 190 of the drop out bracket 154. An arm 212 extends from the shoulder 208 to define a slot 214 between the arm 212 and the body 198. The arm 212 includes an inclined surface 216. As will be discussed in more detail below, the angle of the surface 216 cooperates with a second planar portion 196 of recess 190 to retain the wheel hub 152 when the derailleur hanger 158 is in a first position. In one embodiment, the surface 216 and the second planar portion 196 are arranged to form a V-shaped pocket for retaining the hub 152. A second end 218 of the arm 212 includes a hole 220. The hole 220 is sized to receive a derailleur mounting bolt (not shown) that attaches a derailleur to the derailleur hanger 158.

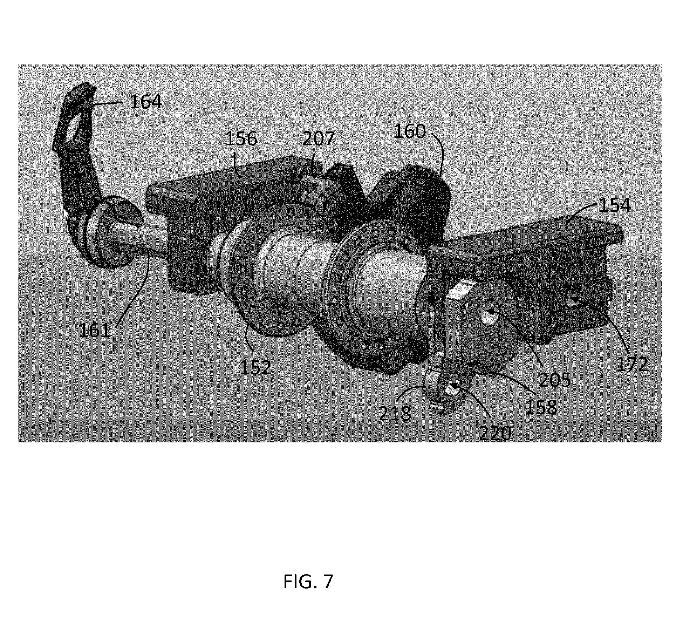

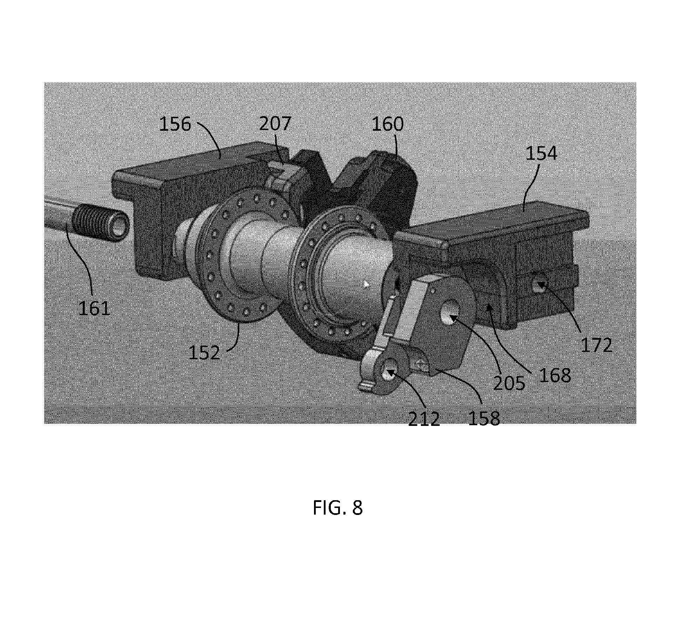

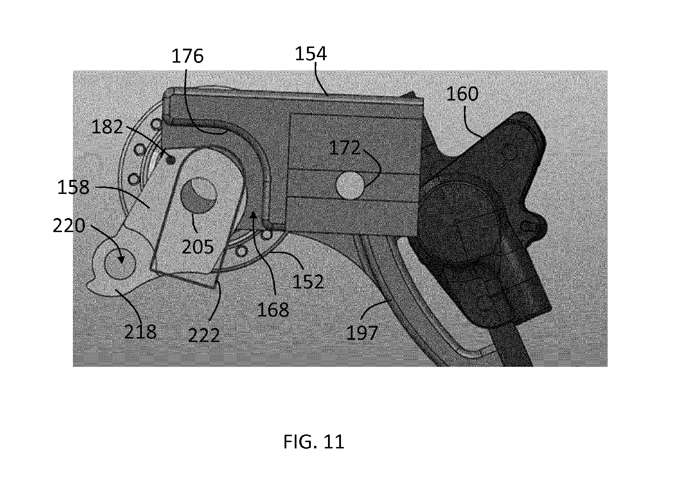

Referring now to FIGS. 7 - 10, the process for removing a wheel hub from the bicycle is described. The rider first removes the wheel axle 161 by removing the fastener from the end 162 and releasing the lever 164. It should be appreciated that as the wheel axle 161 is removed, the hub 152 is retained within the first recess 168 by the surface 216 and the second planar portion 196 while the derailleur hanger 158 is in the first position (FIG. 7). With the wheel axle 161 removed, the rider may rotate the derailleur hanger 158 about the pivot 182 from the first position (FIG. 7) to the second position (FIG. 8). When rotated to the second position, the surface 216 rotates away from the second planar portion 196 to define a hub removal pathway 222 (FIG. 11) for the hub 152 to be removed without interference from the brake caliper 160. Further, the rotation of the derailleur hanger 158 to the second position also moves the derailleur mounting bolt (positioned in hole 220) such that it does not interfere with the removal of the hub 152. In other words, the distance between the second end 218 and the drop out axis 209 increases from the first position to the second position.

The rotation of the derailleur hanger 158 is limited by the position of the protrusion 204 within the slot 178. As the derailleur hanger 158 is rotated, the protrusion 204 contacts the end of the slot 178 halting further travel. It should be appreciated that when the derailleur hanger 158 is in the first position, the hole 205 is aligned or co-axial with the hole 186 and the two holes 186, 205 are offset (e.g. not aligned) when in the second position. Once the derailleur hanger 158 is rotated to the second position, the hub 152 may be removed via the pathway 222.

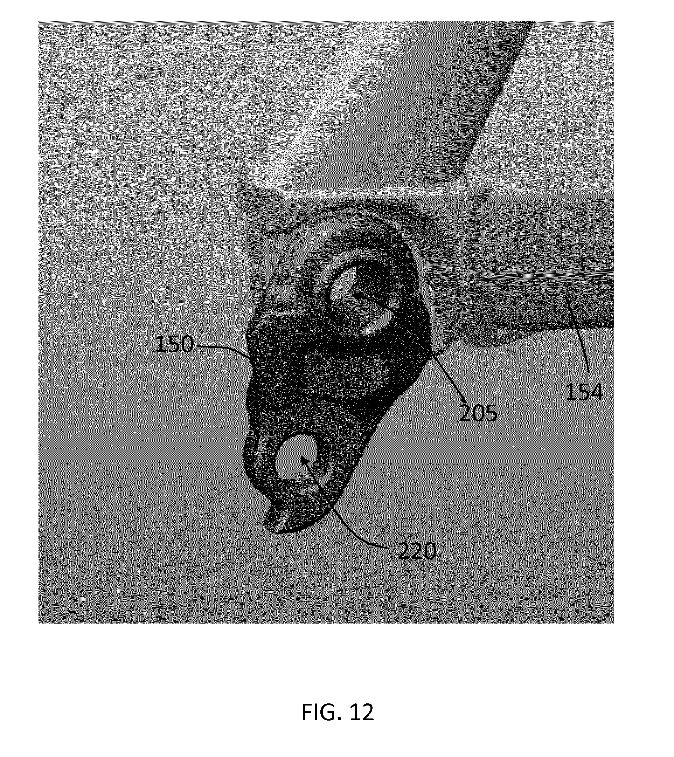

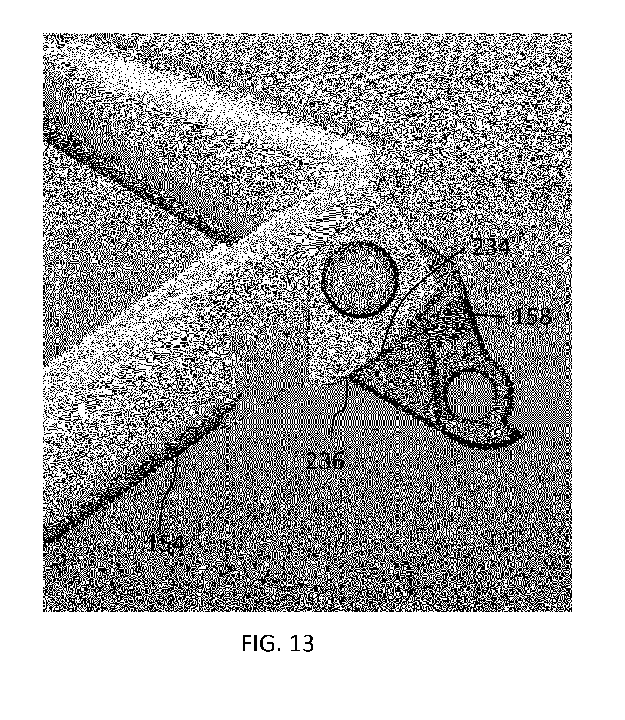

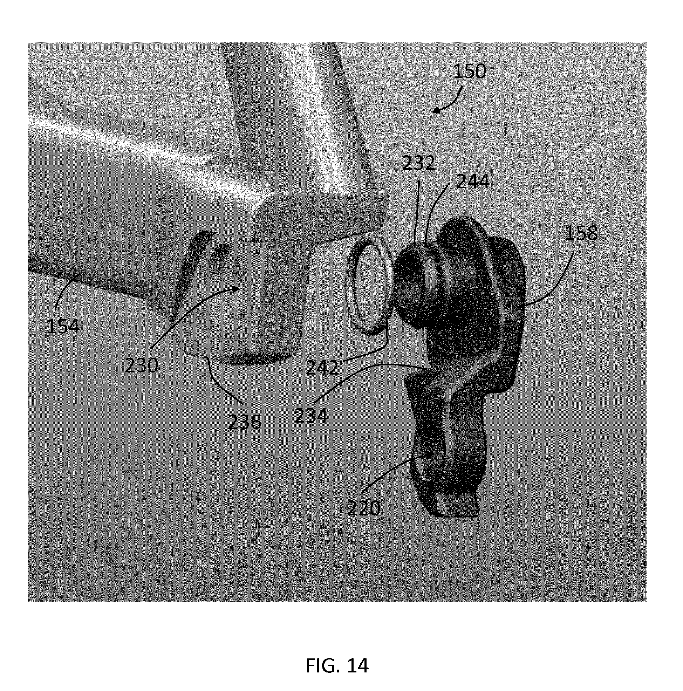

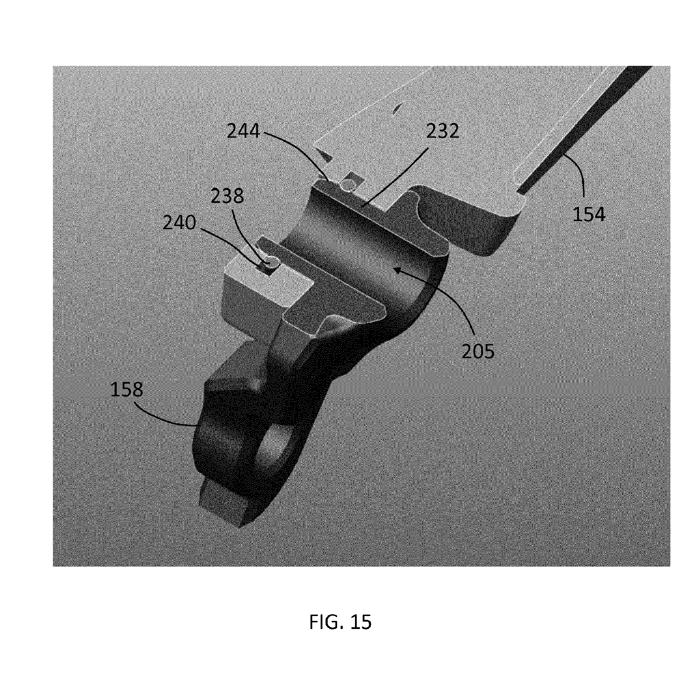

Referring now to FIG. 12 - 15 another embodiment of the assembly 150 is shown. In this embodiment, the first or right-side drop out bracket 154 includes an opening 230 sized to receive the protrusion 232 of the derailleur hanger 158. The opening 230 being co-axial with the through-hole 186 and the hub 152. The derailleur hanger 158 is configured to pivot about the opening 200. Thus the hole 220 and the derailleur mounting bolt rotate on an arc having a center substantially aligned with the hub axis. The angle of rotation between the first or operating position (FIG. 12) and the wheel-removal or second position (FIG. 13) is determined by surface 234 that engages with a lower surface 236 of the drop out bracket 154. The configuration of the surfaces 234, 236 relative to each other determines the angle and position of the derailleur hanger 158.

In one embodiment, a retaining ring 238 is disposed within a groove 240. The retaining ring includes a gap 242 that allows the retaining ring to elastically deform for insert into the groove. A rib 244 is disposed on the protrusion 232. The rib 244 cooperates with the retaining ring 238 such that when the protrusion is inserted into the opening 230, the rib 244 moves past the retaining ring to retain the derailleur hanger 158 to the drop out bracket 154.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Also disclosed are the following :-

A drop out member and derailleur assembly for a bicycle comprising:
a drop out member configured to couple with a chain stay member of the bicycle, the drop out member a first hole extending therethrough, the first hole sized to receive a wheel axle; and
a derailleur hanger rotatably coupled to the drop out member, the derailleur hanger having a protrusion, the protrusion having a second hole extending therethrough, the derailleur hanger movable between a first position with the second hole aligned with the first hole and a second position, wherein the derailleur hanger and drop out member cooperate to define a hub removal pathway when in the second position.

The assembly of para. [0041] wherein:
the drop out member includes a slot, the first hole extending through the slot, the slot being arranged on an angle relative to a drop out angle, the drop out angle defining a direction for removal of a hub; and
the derailleur hanger protrusion being positioned within the slot.

The assembly of para. [0042] wherein the drop out member includes a first recess on a first side and a second recess on an opposing second side, the slot being position within the first recess, the first hole extending between the slot and the second recess.

The assembly of para. [0043] wherein the derailleur hanger includes a body at least partially disposed in the first recess.

The assembly of para. [0044] further comprising a pivot coupling the body to the drop out member within the first recess.

The assembly of para. [0045] wherein the derailleur hanger includes an arm portion spaced apart from the body, the arm portion being at least partially disposed within the second recess when in the first position.

The assembly of para. [0046] wherein the arm portion includes a first end at least partially disposed within the second recess when in the first position and a second end, the second end having an opening sized to receive a derailleur mounting bolt, the second end arranged a first distance from a drop out axis when in the first position and a second distance from the drop out axis when in the second position, the second position being larger than the first position.

The assembly of para. [0046] wherein:
the arm portion includes a surface arranged on an angle relative to a drop out axis;
the second recess includes a side wall; and
the surface and the side wall defining the hub removal pathway when in the second position.

The assembly of para. [0046] wherein the surface and the side wall are positioned to retain the hub when in the first position.

A bicycle having a derailleur hanger pivotally coupled to a drop out bracket to allow removal of a rear wheel without interference from a brake caliper as described herein.

An assembly having a derailleur hanger pivotally coupled to a drop out member to allow removal of a rear wheel without interference from a brake caliper as described herein.

## Claims

1. A bicycle comprising:
a frame having a first chain stay member, the first chain stay member having a first end adjacent a crank assembly and an opposing second end;
a hub removably coupled to the frame;
a drop out member coupled to the first chain stay member;
a brake caliper coupled to the first chain stay member adjacent the first chain stay member second end, the brake caliper arranged on an angle relative to the drop out axis; and
a derailleur hanger movably coupled to the drop out member, the derailleur hanger having a protrusion, the protrusion having a second hole extending therethrough, the derailleur hanger being movable from a first position with the second hole arranged co-axial with the first hole and a second position, the hub being operably coupled to the drop out member when the derailleur hanger is in the first position.

2. The bicycle of claim 1 wherein the angle of the brake caliper relative to the drop out axis is less than an angle at which there would be interference between a brake rotor and the brake caliper during removal of a rear wheel, wherein the brake rotor is coupled to the hub.

3. The bicycle of claim 1 wherein:
the drop out member having a slot, the slot arranged on an angle relative to a drop out axis, the slot having a first hole extending therethrough, the drop out axis defining a direction for removal of the hub; and
the derailleur hanger protrusion being positioned within the slot.

4. The bicycle of claim 3 wherein the drop out member includes a first recess on a first side and a second recess on a second side, the slot being positioned within the first recess, the second recess being sized to receive the hub.

5. The bicycle of claim 4 wherein the derailleur hanger includes a body and an arm portion spaced apart from the body, the protrusion extending from a side of the body facing the arm portion, the arm portion having a first end at least partially positioned within the second recess and a second end, the hub being positioned between the first end and a side wall of the second recess.

6. The bicycle of claim 5 wherein the body is at least partially disposed within the first recess.

7. The bicycle of claim 6 wherein the arm portion includes a surface arranged on angle relative to the drop out axis, wherein the surface retains a portion of the hub within the second recess when the derailleur hanger is in the first position.

8. The bicycle of claim 7 wherein the second end of the derailleur hanger moves away from the brake caliper when the derailleur hanger pivots from the first position to the second position.

9. The bicycle of claim 1 further comprising:
a second chain stay member arranged opposite the first chain stay member from the hub, the second chain stay member having a slot sized to receive a portion of the hub.

10. A method of removing a hub from a bicycle, the method comprising:
removing an axle from a wheel hub, the axle configured to extend through a drop out member and a derailleur hanger, the hub being configured to be retained within a recess of the drop out member;
pivoting the derailleur hanger from a first position to a second position, the derailleur hanger having an arm with an angled surface on one end and a derailleur bolt on a second end, the angled surface cooperating with the recess to define a hub removal path when in the second position such that the derailleur bolt does not interfere with the removal of the wheel hub; and
removing the wheel hub from the bicycle.

11. The method of claim 10 further comprising mounting a brake caliper to a bicycle chain stay member, the brake caliper having a longitudinal axis arranged on an angle relative to the hub removal path.

12. The method of claim 10 further comprising retaining the wheel hub in the recess with the angled surface when in the first position.
